# EUROPEAN PATENT APPLICATION

(11) **EP 2 043 111 A1**
(43) Date of publication of application: **01.04.2009**
(21) Application number: 08015866.0
(22) Date of filing: 09.09.2008
(51) Int. Cl.: H01F 1/057

(54) **Rare earth permanent magnetic alloy and producing method thereof**

(30) Priority: 10.09.2007 JP 2007234793; 14.03.2008 JP 2008066884
(71) Applicant: Nissan Motor Co., Ltd., Kanagawa 221-0023 (JP); Meiji University Legal Person, Tokyo 101-8301 (JP)
(72) Inventor: Yamamoto, Hiroshi, Kawasaki-shi, Kanagawa 214-8571 (JP); Tayu, Tetsurou, Atsugi-shi, Kanagawa 243-0123 (JP); Ohmura, Masashi, Atsugi-shi, Kanagawa 243-0123 (JP); Otani, Keizou, Atsugi-shi, Kanagawa 243-0123 (JP); Yabumi, Takao, Nagoya-shi Aichi 457-8545 (JP); Hashino, Hayato, Nagoya-shi Aichi 457-8545 (JP)
(74) Representative: Hager, Thomas Johannes

(57) **Abstract**

A rare earth permanent magnet alloy with a high coercive force is disclosed. The rare earth permanent magnet alloy comprises: a rare earth-iron-boron type magnetic phase (R₂Fe₁₄B type magnetic phase) constituting a parent phase; and a defect structure. The parent phase contains the defect structure. Displacement of magnetic domain wall of the R₂Fe₁₄B type magnetic phase is prevented by the defect structure, thereby improving coercive force.

## Description

### BACKGROUND OF THE INVENTION

### 1. Field of the Invention

The present invention relates to a rare earth permanent magnet alloy magnetic property, especially coercive force, is improved.

### 2. Description of the Related Art

R₂Fe₁₄B system magnet having R₂Fe₁₄B type magnetic phase and being a permanent magnet material has magnetic characteristics in which magnetization and coercive force are highly excellent, and uses light rare earth, such as comparatively resource-rich Nd, Pr, etc., Fe, and B as raw materials. For this reason, use of the R₂Fe₁₄B system magnet is spread to various markets as an industrially important rare earth permanent magnet material which replaces SmCo system magnet.

In using the R₂Fe₁₄B system magnet under the hot environments such as an automotive drive motor, heat demagnetization becomes a great problem. As the R₂Fe₁₄B system magnet has especially low Curie temperature compared with the SmCo system magnet which is the same rare earth permanent magnet, its temperature change of magnetic property is large. That is, the R₂Fe₁₄B system magnet has excellent magnetic characteristics near room temperature. However, its coercive force decreases greatly especially under high temperature, and irreversible demagnetization occurs.

According to such a reason, as disclosed in Japanese Patent No. 2893265 (hereinafter patent document 1), a method for improving heat resistance of the R₂Fe₁₄B system magnet has been proposed. This method improves coercive force of the R₂Fe₁₄B system magnet by depositing in the R₂Fe₁₄B type magnetic phase magnetic hardening deposit composed of non-magnetic material and pinning magnetic domain wall using magnetostatic energy.

However, when a usage under hot environments, such as an automotive driving system, is considered, request for heat resistance becomes strong form year to year. Therefore, improvement in much more coercive force is required for the permanent magnet alloy disclosed in the patent document 1.

The object of the present invention is to provide a new rare earth permanent magnet which can be used also under hot environments by obtaining high coercive force at room temperature.

### SUMMARY OF THE INVENTION

A rare earth permanent magnet alloy according to the present invention comprises: a rare earth-iron-boron type magnetic phase (R₂Fe₁₄B type magnetic phase) constituting a parent phase; and a defect structure. The parent phase contains the defect structure. The defect includes a part comprising the R₂Fe₁₄B type magnetic phase as a main component and that magnetic property is modulated from magnetic property of the parent phase.

A producing method of a rare earth permanent magnet alloy according to the present invention comprises the steps of: generating a defect structure included in a rare earth-iron-boron type magnetic phase (R₂Fe₁₄B type magnetic phase) constituting a parent phase and comprising the R₂Fe₁₄B type magnetic phase as a main component. The defect structure is generated to include a part that magnetic property is modulated from magnetic property of the parent phase by performing one or more aging process.

### BRIEF DESCRIPTION OF THE DRAWINGS

Exemplary embodiments of the invention will become more fully apparent from the following description and appended claims, taken in conjunction with the accompanying drawings. Understanding that these drawings depict only exemplary embodiments and are, therefore, not to be considered limiting of the invention's scope, the exemplary embodiments of the invention will be described with additional specificity and detail through use of the accompanying drawings in which:
Fig. 1 shows a TEM bright field image of an alloy ribbon observed by [001] zone axis incidence for the parent phase, the alloy ribbon produced by conditions whose composition is Pr_{13.8}Fe_{bal}Co_{8.3}Ti_{0.44}B_{12.7}Si_{0.65}Y_{0.64}, roll circumferential speed is 20 m/sec, heat-raising time is 5 min, heat processing temperature is 725 °C, and heat treating time is 5 min;
Fig. 2A shows a TEM bright field image obtained by enlarging a part of Fig. 1;
Fig. 2B shows a nano beam diffracted image measured within the same visual field of Fig.2A;
Fig. 3 shows a TEM bright field image of an alloy ribbon observed by [110] axis incidence, the alloy ribbon produced by conditions whose composition is Pr_{13.8}Fe_{bal}Co_{8.3}Ti_{0.44}B_{12.7}Si_{0.65}Y_{0.64}, roll circumferential speed is 20 m/sec, heat-raising time is 5 min, heat processing temperature is 725 °C, and heat treating time is 5 min;
Fig. 4A shows a TEM bright field image obtained by enlarging a part of Fig. 3;
Fig. 4B shows a nano beam diffracted image measured within the same visual field of Fig.4A;
Fig. 5 shows a TEM bright field image of an alloy ribbon observed by about [110] axis incidence, the alloy ribbon produced by conditions whose composition is Pr_{13.8}Fe_{bal}Co_{8.3}Ti_{0.44}B_{12.7}Si_{0.65}Y_{0.64}, roll circumferential speed is 20 m/sec, heat-raising time is 5 min, heat processing temperature is 850 °C, and heat treating time is 5 min;
Fig. 6A shows a TEM bright field image obtained by enlarging a part of Fig. 5;
Fig. 6B shows a nano beam diffracted image measured within the same visual field of Fig.6A;
Fig. 7 shows a TEM bright field image obtained by enlarging a part of Fig. 5;
Fig. 8 shows an LACBED pattern obtained near the defect structure of an alloy ribbon, the alloy ribbon produced by conditions whose composition is Pr_{13.8}Fe_{bal}Co_{8.3}Ti_{0.44}B_{12.7}Si_{0.65}Y_{0.65}, roll circumferential speed is 20 m/sec, heat-raising time is 5 min, heat processing temperature is 850 °C, and heat treating time is 5 min;
Fig. 9 is an explanatory diagram of the pattern of Fig. 8;
Fig. 10 shows an HAADF-STEM image obtained from an alloy ribbon produced by conditions whose composition is Pr_{13.8}Fe_{bal}Co_{8.3}Ti_{0.44}B_{12.7}Si_{0.65}Y_{0.64}, roll circumferential speed is 20 m/sec, heat-raising time is 5 min, heat processing temperature is 850 °C, and heat treating time is 5 min;
Figs. 11A, and 11B are an image obtained by enlarging region A of Fig.10 and its conceptual diagram, respectively;
Figs. 12A, and 12B are an image obtained by enlarging region B of Fig.10 and its conceptual diagram, respectively;
Figs. 13A, and 13B are an image obtained by enlarging region C of Fig.10 and its conceptual diagram, respectively;
Figs. 14A, and 14B are an image obtained by enlarging region D of Fig.10 and its conceptual diagram, respectively;
Fig. 15 shows an HAADF-STEM image obtained from an alloy ribbon produced by conditions whose composition is Pr₁₃Fe_{62.3}Co₈Ti_{1.5}B₁₄Y_{0.7}Si_{0.5}, roll circumferential speed is 20 m/sec, heat-raising time is 5 min, heat processing temperature is 750 °C, and heat treating time is 5 min;
Fig. 16 shows an HAADF-STEM image obtained by inclining the alloy ribbon by 10 degrees and observing the same visual field as Fig. 12;
Fig. 17 is a figure comparing the form of the specific defect structure in Fig. 15 with the form in Fig. 16;
Fig. 18 is a figure comparing the form of the specific defect structure in Fig. 15 with the form in Fig. 16;
Fig. 19 is a figure comparing the form of the specific defect structure in Fig. 15 with the form in Fig. 16; and
Fig.20 is a TEM bright field image observed [100] zone axis incidence for the parent phase about the magnet ribbon sample produced by conditions whose composition is Pr_{13.8} Y_{0.6} Fe_{63.5}Co_{8.1}B_{14.1}Si_{0.6}, wheel velocity is 18 m/sec, annealing temperature is 600 °C, and annealing time is 10 min.

### DETAILED DESCRIPTION OF THE PREFERRED EMBODIMENTS

A rare earth permanent magnet alloy according to the present invention comprises: a rare earth-iron-boron type magnetic phase (R₂Fe₁₄B type magnetic phase) constituting a parent phase; and a defect structure. The parent phase contains the defect structure. The defect includes a part comprising the R₂Fe₁₄B type magnetic phase as a main component and that magnetic property is modulated from magnetic property of the parent phase.

Theoretical analysis will be conducted about the predominancy of the rare earth permanent magnet alloy of the present invention. Magnetic domain wall placed into a homogeneous medium of sufficiently great size can displace easily without preventing displacement. Therefore, since a single crystal of the R₂Fe₁₄B magnetic phase having for example sufficiently great size does not have the means for preventing a magnetization reversal caused by magnetic domain wall displacement, the single crystal of the R₂Fe₁₄B magnetic phase does not have much coercive force.

In order to prevent this magnetic domain wall displacement, a heterogeneous constitution needs to be introduced. As the one means, introduction of the impurity composed of non-magnetic material inside a magnetic substance is disclosed in Japanese patent No. 2893265. According to this method, as a magnetic pole is formed in the interface between the impurity and the magnetic substance, when a magnetic domain wall passes the impurity, a magnetic pole distribution of the interface between the impurity and the magnetic substance is affected, and obstruction of magnetic domain wall displacement is caused by the energy barrier attributed to magnetostatic energy. On the other hand, the present invention aims at preventing the magnetic domain wall displacement by forming a part that magnetic property is locally modulated.

In the case that a part where magnetic property is locally modulated by a certain means exists in the magnetic phase, domain wall energy also changes through change of exchange energy or magnetocrystalline anisotropy energy as compared with the circumference of the part. For this reason, since the magnetic domain wall receives repulsion or attraction from this part, the magnetic domain wall displacement is obstructed.

As an introductory style of such a part includes element replacing a lattice point of the magnetic phase crystal, element invasion to interstitial sites, crystallization of precipitation phase accompanied by lattice matching to the inside of the magnetic substance phase, etc., all of which caused by specific element concentration into local part, are cited. In each cases, although there is a difference of a degree, the exchange energy and the magnetocrystalline anisotropy energy are changed through the electronic state change and the lattice constant change, and the domain wall energy is changed. It contributes to obstruction of the magnetic domain wall displacement.

An impurity may be included in the defect structure which the permanent magnet alloy of the present invention includes. The permanent magnet alloy of the present invention has great intrinsic coercive force. Therefore, when the defect structure includes the precipitation phase served as an impurity, still stronger inhibitory action against magnetic domain wall movement may be caused because the effect of impurity introduction and the effect of local magnetic modulating occur complexly.

The R₂Fe₁₄B type magnetic phase is a main component of the defect structure. According to such a structure, as compared with the case where the main component of defect structure is a substance with a small contribution of magnetization, such as a impurity composed of non-magnetic material, the defect structure itself has magnetization and contributes to the magnetization value of material. If the case where a defect structure composes a plate and/or needle crystal and a lattice strain is considered for an example, even when the plate crystal is a non-magnetic material (impurity), although many of volume of the defect structure is accompanied by the lattice strain, an R₂Fe₁₄B type magnetic phase which is a ferromagnetic phase occupies them. Therefore, coercive force can be increased without reducing the volume fraction of the ferromagnetic phase.

In order for defect structure to obstruct the magnetic domain wall movement effectively, it is necessary to care about the size of defect structure. First, the size of defect structure is related to the size of the interaction between each the defect structure and the magnetic domain wall. Although the magnetic domain wall thickness of the permanent magnet of the present invention is not measured, it is expected to be about 5.2 nm which is the magnetic domain wall thickness required for the above-mentioned Nd₂Fe₁₄B single crystal plate. However, when the magnetic domain wall reaches the defect structure, it is expected that the magnetic domain wall width changes a little. When the size of defect structure is of the same degree as the magnetic domain wall width at the outside of defect structure and the magnetic domain wall width at the time of reaching the defect structure, the interaction between the magnetic domain wall and the defect structure is large, and the defect structure can obstruct the magnetic domain wall displacement effectively as mentioned above. On the other hand, when the size of defect structure differs from the magnetic domain wall width greatly, there is a possibility that the interaction between the defect structure and the magnetic domain wall may become small.

The domain wall energy gives the maximal value or the minimal value in the defect structure position. It cannot be being verified whether the magnets of the present invention are the maximum/minimum. However, it is the greatest place of the slope of domain wall energy that each magnetic domain wall receives the movement obstruction most strongly in any case.

When the size of defect structure is large enough for the magnetic domain wall width, the spatial variance of domain wall energy becomes gentle. As a result, since the slope of domain wall energy becomes small, the interaction between each defect structure and the magnetic domain wall becomes small. On the contrary, when the size of defect structure is small enough for the magnetic domain wall width, the influence which defect structure causes to the magnetic domain wall is tamed inside the magnetic domain wall having limited thickness, and the interaction between defect structure and the magnetic domain wall becomes small (refer to Sohshin Chikazumi, "PHYSICAL OF FERROMAGNETIC (Lower Volume) <MAGNETISM AND APPLICATION>", pp. 241, Shokabo Publishing Co., Ltd.).

In second, in order that the defect structure obstructs the magnetic domain wall displacement effectively, the number density of defect structure is important. When a driving force, such as an external magnetic field, is given to the magnetic domain wall, for example, the pressure p which satisfies p=2IsH (where Is is the spontaneous magnetization of the magnetic domain, H is the magnetic field, and S is the size of the magnetic domain wall) is applied to the magnetic domain wall (refer to Sohshin Chikamizu, "PHYSICAL OF FERROMAGNETIC (Lower Volume) <MAGNETISM AND APPLICATION>", pp. 225, Shokabo Publishing Co., Ltd.). In order to stop the magnetic domain wall displacement, sufficient defect structure to resist this pressure needs to exist inside the magnet.

Since maintaining highly the volume fraction of the R₂Fc₁₄B magnetic phase occupied to the magnet is required in order to obtain satisfactory magnetic characteristics, the element addition for defect structure formation cannot be increased boundlessly. For this reason, when the size of defect structure is enlarged too much, there is a possibility that required number density may not be securable. Therefore, the size and number density of defect structure appropriate for stopping the magnetic domain wall displacement should be adjusted by selecting aging process conditions according to the magnet alloy composition.

Although the coercive force mechanism of the permanent magnet according to the present invention is not clarified clearly, the permanent magnet of high coercive force can be obtained by the size of the defect structure being set up on the basis of magnetic domain wall width. Although the range of the size of the defect structure is 3 nm to 20 nm preferably, it may select except the above mentioned range as long as the magnetic domain wall is pinned. By bearing in mind that the size which can interact with the magnetic domain wall as mentioned above and the sufficient number density is ensured, it can select in the range in which the magnetic domain wall displacement is obstructed.

Although the size of the defect structure was explained as 3 nm to 20 nm, the defect structure is affected by influence according to a manufacturing environment. Therefore, what is necessary is just to set up the size of the defect structure on the basis of magnetic domain wall width by taking into consideration such as the magnetic domain wall not passing through the defect structure. Thus, the size of the defect structure is not limited to 3 nm to 20 nm.

The internal energies of ferromagnetics including the R₂Fe₁₄B type magnetic phase which the present invention objects are described by the sum total of various energies, such as magnetostatic energy, exchange energy, anisotropy energy, and magnetoelastic energy. In the following explanation, the relation with the introductory style of defect structure will be explained about the exchange energy and magnetocrystalline anisotropy energy, which contribute to the domain wall energy greatly, especially with large participation to the present invention.

The exchange energy is caused by the exchange connection between the spins which involve. Since expansion and contraction of the lattice constant of the crystal, i.e., expansion and contraction of lattice point distance, influence exchange connection greatly, the exchange energy will also be changed. The variation of symmetry by the crystal lattice curving etc. also influences the exchange energy. Element replacing to the crystal phase influences similarly.

The magnetocrystalline anisotropy energy of the R₂Fe₁₄B type magnetic phase is caused mainly by one ion anisotropy of the rare earth ions formed by the interaction of the crystal electric field of the circumference of R site and the 4f electron which R atom has. Therefore, expansion and contraction of a lattice constant, reduction of symmetry, the lattice point of the circumference of R site which forms a crystal electric field, and element replacing to the R site itself vary the magnetocrystalline anisotropy energy.

As a first example, when the lattice point of the R₂Fe₁₄B type magnetic phase is replaced by another element, both of the exchange energy and the magnetocrystalline anisotropy energy are varied through variation of a neighboring lattice point distance, variation of the symmetry of the crystal, and the number of the electrons which participate in magnetism, and variation of an energy state. Since space variation is caused to the domain wall energy when this occurs locally, the magnetic domain wall displacement is obstructed.

As a second example, when element of different species which atomic radius is small trespasses inside the lattice point of an R₂Fe₁₄B type magnetic phase, the expansion of a lattice, i.e., a lattice constant increases. When the lattice constant increases, exchange energy is changed due to perturbation given to exchange connection between the rare earth site and an iron site. The magnetocrystalline anisotropy energy is also changed due to disorder of crystal field around the rare earth site and change of distance between ions. Since space variation is caused to the domain wall energy when this occurs locally, the magnetic domain wall displacement is obstructed.

As a third example, when element replacing to the lattice point occurs, lattice will receive modification due to difference of atomic radius, ion radius, etc, and influence on the electronic state which participates in connection. Therefore, since a lattice constant is spatially varied when the concentration is locally high, lattice strain has occurred, and the domain wall displacement is obstructed.

As a fourth example, when an impurity grows into the crystal lattice, the surrounding crystal may form lattice strain. However, it is not the limitation, when there is an interference layer, like disorder occurs in the interface with the parent phase, and the impurity exists nonsequetially.

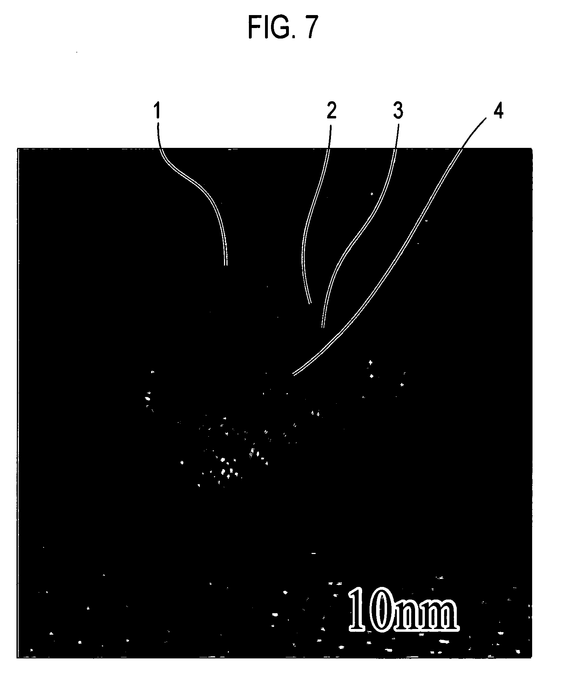

As shown in Fig. 7, a rare earth permanent magnet alloy according to the present invention includes a rare earth-iron-boron type magnetic phase (R₂Fe₁₄B type magnetic phase) 1 constituting a parent phase and at least a defect structure 2, as a fundamental configuration. The defect structure 2 includes the R₂Fe₁₄B magnetic phase as a main component, and further the defect structure 2 is included in the R₂Fe₁₄B type magnetic phase 1.

The R₂Fe₁₄B type magnetic phase denotes an intermetallic compound phase with tetragonal Nd₂Fe₁₄B structure. If it is in the condition which can form the R₂Fe₁₄B type magnetic phase, the kind and rate of the rare earth element R to be used can be selected from the following various viewpoints according to the object. The viewpoints include improvement of magnetic characteristics such as magnetization, coercive force, temperature coefficient of these, and maximum energy product; improvement of ease of material handling such as magnetization characteristics, corrosion resistance, a mechanical property, safety, and endurance; commercial viewpoints such as resource quantity, supply stability, demand-and-supply balance, and a material price; and affinity with construction methods to be used such as hot processing.

For the R₂Fe₁₄B type magnetic phase 1, various property values useful to a design of the R₂Fe₁₄B type magnetic phase are reported and introduced (refer to: Masato Sagawa, Satoshi Hirosawa, Hitoshi Yamamoto, Yutaka Matsuura, and Setsuo Fujimura, "SOLID STATE PHYSICS", pp. 21, 37-45 (1986); and Yoshio Tawara, and Ken Ohashi, "RARE EARTH PERMANENT MAGNET", Morikita Shuppan Co., Ltd. (1999)). It is investigated about various R₂Fe₁₄B type magnetic phases consisting of one kind of specific rare earth element R, in the above-mentioned references. When the Pr and Nd are used as a rare earth element R, uniaxial anisotropy having been shown and providing magnetization and an anisotropy magnetic field with sufficient balance in a wide temperature span is shown in the above-mentioned references. Therefore, as for the rare earth element R, it is preferred to select Pr and Nd as a main constituent.

When Tb, Dy, and Ho are used as a part of a rare earth element R element, the effect of raising the anisotropy magnetic field of the R₂Fe₁₄B type magnetic phase 1 and improving coercive force can be expected. However, it is necessary to decide the amount used by being careful of the reduction of magnetization of the R₂Fe₁₄B type magnetic phase 1. The other rare earth elements R can also be used, caring about the reduction of magnetization and the reduction of the anisotropy magnetic field. It is necessary to select a rare earth element R to replace and the amount of replacing in a range which does not prevent formation of the defect structure 2.

In the R₂Fe₁₄B type magnetic phase 1, other transition metal elements may replace a part of Fe. However, it is necessary to select an element to replace and the amount of replacing, taking balance of required magnetic characteristics into consideration, in a range which does not prevent formation of the defect structure 2. In particular, addition of Co is effective in an improvement of magnetic property, and an effect which raises Curie temperature of the R₂Fe₁₄B type magnetic phase, and an effect which raises saturation magnetization are obtained by replacing a part of Fe by Co. An effect of improving corrosion resistance may also be obtained by replacing a part of Fe by Co. On the other hand, since replacing of a part of Fe by Co causes reduction of coercive force, it needs to select the suitable amount of replacing according to the object.

The third phase except both the R₂Fe₁₄B type magnetic phase 1 and the defect structure 2 can also be included in the rare earth permanent magnet alloy of the present invention in the range in which coercive force is not reduced greatly. For example, if the third phase is soft magnetism, such as Fe, Fe-Co phase, Fe₃B phase, having greater saturation magnetization than the R₂Fe₁₄B type magnetic phase, it is useful as an exchange spring magnet with which magnetization is raised. What is necessary is just to produce a rare earth permanent magnet in the range from which magnetic combination is ensured between the third phase and the R₂Fe₁₄B type magnetic phase 1, and in the range which does not obstruct formation of the defect structure 2, taking care that the distance which an intergrain exchange interaction of the R₂Fe₁₄B type magnetic phase 1 and the soft phase affects is 1/2 at most or less of the magnetic domain wall width of the soft phase.

The third phase may be included in the R₂Fe₁₄B type magnetic phase 1, and may be adjoining of the outside of the R₂Fe₁₄B type magnetic phase 1, if the third phase is in the range which magnetic connectionn is ensured between the third phase and the R₂Fe₁₄B type magnetic phase 1 and can be served as a single permanent magnet material, and in the range which does not obstruct magnetic domain wall pinning by the defect structure 2. The rare earth magnet alloy of the present invention can contain grain boundary of the R₂Fe₁₄B type magnetic phase 1. As the third phase, rare earth rich phase and boron rich phase can also be included, caring about the reduction of the magnetic properties such as the magnetization and coercive force. In order to enlarge the coercive force of the magnet alloy, it is possible to introduce rare earth rich phase as the grain boundary of the R₂Fe₁₄B type magnetic phase 1. For the purpose mentioned above, the size distribution, form and orientation of crystal grains of the R₂Fe₁₄B type magnetic phase 1 can be selected.

In the rare earth permanent magnet alloy of the present invention, the defect structure 2 includes a lattice strain 3 of the R₂Fe₁₄B type magnetic phase 1.

For example about the Nd₂Fe₁₄B type magnetic phase, as for the magnetic domain wall width in the R₂Fe₁₄B type magnetic phase 1, it is required that magnetic domain wall width is 5.2 nm from labyrinth magnetic domain observation of a single crystal plate of Nd₂Fe₁₄B (refer to Masato Sagawa, Satoshi Hirosawa, Hitoshi Yamamoto, Yutaka Matsuura, and Setsuo Fujimura, "SOLID STATE PHYSICS", pp. 21, 37-45 (1986)).

Although it is dependent also on the formation method of the defect structure 2, since the total amount of the element which forms the deposit contained in a system is limited before a deposit in using a deposition phenomenon for formation of the defect structure 2, the number density of the defect structure 2 will decrease if the deposit is advanced too much, and there is a possibility that magnetic coercive force may not be heightened. If the deposit is advanced too much, it is afraid that the lattice strain in the defect structure 2 will be reduced. Furthermore, although it is natural, the size of the defect structure 2 is less than the size of the R₂Fe₁₄B type magnetic phase 1 including it. The size of the defect structure 2 can be estimated using contrast which a strain field built at a circumference of particles in a bright field image of a TEM (Transmission Electron Microscope), when the defect structure 2 composes a deposit and a coherent strain, for example. Moreover, it is possible to guess the size of the whole defect structure by using that a composition image (Z contrast image) is obtained by an HAADF image using an STEM (Scanning Transmission Electron Microscope), referring to the size of Z contrast image which a part of the defect structure builds. Furthermore, it is also possible to perform direct observation of the strain field included in the defect structure 2 using an LACBED (Large Angle Convergence Electron Beam Diffracting) method.

As mentioned above, in a rare earth permanent magnet alloy of the present invention, the defect structure 2 includes the lattice strain 3 of the R₂Fe₁₄B type magnetic phase 1. The lattice strain 3 of the R₂Fe₁₄B type magnetic phase 1 can be formed using a deposition phenomenon and a phase separation phenomenon from a state which a specific element dissolves into the R₂Fe₁₄B type magnetic phase 1. For example, the lattice strain 3 of the R₂Fe₁₄B type magnetic phase 1 can be formed using a deposition phenomenon from a supersaturated solid solution which a specific element dissolves superfluously into the R₂Fe₁₄B type magnetic phase 1.

In the age-hardening type aluminium alloy etc., the precipitation hardening phenomenon by the aging process of a supersaturated solid solution and the overaging softening phenomenon at the time of continuing aging further are known. It is known that: the supersaturated solid solution performs generally phase decomposition in the following processes, through aging process of a supersaturated solid solution at this time, and the deposit will occur; the mechanical strength of the aluminium alloy will change by an interaction between the deposit and the transposition; and the mechanical strength will be controllable with adjustment of aging process conditions, i.e., a state of the deposit, the size, and the number density (refer to Akihisa Inoue editorial supervision, "NANO MATERIAL ENGINEERING SYSTEM (2nd Volume) NANO METAL", Fuji Techno System Co., Ltd., pp. 68 (2006)).

It is known that: the element dissolving by the supersaturation state condenses and deposits, with advance of aging process, along a crystal plane of a specific index in the aluminum crystal phase which is a parent phase, i.e., {100} planes or {111} planes, and forms a platy deposit at the end; and a coherent strain field of the parent phase crystal will be formed in the surroundings of the platy deposit along the crystal plane, since the deposits including GP zone made in this concentration and the deposition phenomenon cause a lattice strain to the surrounding parent phase crystal.

Also in the R₂Fe₁₄B type magnet material, it is possible to use same deposition phenomenon by performing as a supersaturated solid solution which a specific element dissolves superfluously beforehand to a raw material alloy. In this case, concentration of the element which performed supersaturation dissolution, the separation state, the size, the number density, etc. change in connection with the aging process. Although the structure of the deposit cannot be specified, the deposit causes the lattice strain to the surrounding parent phase crystal by forming platy as an aggregate of the supersaturation dissolution element adjusted to the crystal lattice along a specific crystal plane of the R₂Fe₁₄B type magnetic phase 1 which is the parent phase, and being controlled a separation state by the aging process, thereby being expected that this lattice strain constitutes the coherent strain.

In the above explanation, it explains as the lattice strain 3 taking the case of the coherent strain, and is not but limited to this. If the lattice strain 3 can improve the coercive force of the rare earth permanent magnet which has the R₂Fe₁₄B type magnetic phase as a result in being the size about the magnetic domain wall width of the R₂Fe₁₄B type magnetic phase which is the parent phase, and modulating wall energy, the lattice strain 3 is not limited to a coherent strain.

As mentioned above, the defect structure 2 is included in the R₂Fe₁₄B type magnetic phase 1 in the present invention. When the defect structure 2 composes the plate and/or needle crystal and the lattice strain 3, although many of the defect structure 2 is accompanied by strain, the R₂Fe₁₄B type magnetic phase 1 which is the ferromagnetic phase occupies them. Therefore, coercive force can be increased without reducing the volume fraction of the ferromagnetic phase.

According to the present invention, the defect structure 2 includes concentration region of a specific element gathered and formed by specific elements performing supersaturation dissolution in a supersaturated solid solution, and the R₂Fe₁₄B type magnetic phase. As for the R₂Fe₁₄B type magnetic phase, the magnetic property is modulated. If it is a range where magnetic coercive force is increased, as for the structure for modulating magnetic property of the R₂Fe₁₄B type magnetic phase, a magnetic property may be modulated by concentration of the element to inside of the phase, and a magnetic property may be modulated with the lattice strain. As long as it can form the defect structure 2, Fe and Fe-Co may be deposited. In this case, it can be applied as an exchange spring magnet and magnetic magnetization and maximum energy can be raised.

Any element may be sufficient, as long as it can form the defect structure 2 and the magnetic characteristics are improved, as the specific element. For example, R element and B element can be used as the specific element. Moreover, the element group by which forming the deposit in R₂Fe₁₄B type magnetic phases including Ti is known, also in the group of 3d, 4d, and 5d transition metals can be used.

According to the present invention, since the deposit is fine, investigating exactly is difficult for the distributed situation of the element within the defect structure 2 in the magnet. For example, a half quantity result in which the signal both of the deposit and the lattice strain is existed can be obtained by nano beam EDS which conducts semiquantitative analysis by EDS in the condition that an electron beam is extracted to about 3 to 5 nm or less within TEM, and a half quantity result in which accompanying of the R₂Fe₁₄B type magnetic phase which is the parent phase is also existed can be obtained. The tendency of composition of the deposit can be known from this result.

As an example, when R, Fe, Co, Ti, and B are included in the rare earth element, it is difficult in EDS to get to know distribution of B which is a light element. However, as a result of measuring the defect structure 2, for example, an actual measurement of element concentration ratio R/(Fe+Co) is compared with stoichiometry (R/(Fe+Co)=2/14) of the R₂Fe₁₄B type magnetic phase by which a part of Fe is replaced by Co. As a result of the comparison, if the actual measurement R/(Fe+Co)>2/14 is satisfied, it can know that R has condensed to the deposit. However, since the detection of B which is a light element is difficult by EDS, cautions are required. It is an ideal to investigate a distribution state of the element, using together elemental mapping using an energy filter image of TEM, and analysis and an analytic method of a three-dimensional atom probe microscope, if needed.

A rare earth permanent magnet alloy according to the present invention includes at least R (where R is a rare earth element including Y), Fe, and B. At this point, a part of Fe may be replaced by Co. A part of R may be added as an additive to the R₂Fe₁₄B type magnetic phase. The rare earth permanent magnet alloy can include R (where R is a rare earth element including Y), Fe, and B, in addition can include at least elements except R (where R is a rare earth element including Y), Fe, and B as an additive. The additive element may be added for the object of formation of the deposit via a supersaturated solid solution, in using the aging deposition phenomenon, for example as the defect structure 2. The additive element kind should just choose the element etc. which form a boride etc. and are easy to perform a fine deposit that it is hard to dissolve to R₂Fe₁₄B phase, from 5d transition metal elements, such as Zr, Nb, and Mo, 4d transition elements, or 3d transition metal elements, such as Ti. What is necessary is just to adjust the addition, in order to obtain the target magnetic characteristics. For example, if there are too few additives, the size and number density of the deposit lack, and the coercive force will be insufficient since the effect of a magnetic domain wall displacement obstruction is small. Conversely, if there are too much additives, a volume fraction of the R₂Fe₁₄B magnetic phase will become small, and will be a small magnet of magnetization.

What is necessary is just to adjust the additive element on the basis of acting effectively in order to improve in the coercive force of the defect structure 2. For example, in the case a part of R is replaced by rare earth element R' (where R' is rare earth elements except R including Y) from which an atomic radius differs in the interaction between the defect structure and the magnetic domain wall, the degree of the strain included in the defect structure, the lattice matching relation between the deposit and a parent phase, and the interaction between the defect structure and the magnetic domain wall which are defined by these influences are affected. Although a high coercive force can be obtained in a wide manufacturing condition especially in the case R' is replaced by Y, it is not limited to this case. What is necessary is to take into consideration the degree of influence on the interaction between the defect structure and the magnetic domain wall, and just to select the additive element and addition appropriate for the object.

The additive element which improves the magnetic property of the R₂Fe₁₄B type magnetic phase 1 of the parent phase can also be included. For example, Tb, Dy, Ho, Co, C, Si, and Y may be included. Moreover, an additional element may be used for the other object. For example, in using many praseodymiums (Pr) as R, the casting flow of a molten metal may worsen. In order to improve this casting flow, a little silicon (Si) can also be added.

Next, a method for producing the rare earth permanent magnet alloy according to the present invention will be explained. A producing method according to the present invention generates a defect structure included in a rare earth-iron-boron type magnetic phase (R₂Fe₁₄B type magnetic phase) constituting a parent phase and comprising the R₂Fe₁₄B type magnetic phase as a main component. In the generation process of the defect structure, the defect structure is generated to include a part that magnetic property is modulated from magnetic property of the parent phase by performing one or more aging process.

As the aging process, a crystallization process of the parent phase is succeedingly performed after at least one amorphization process. The crystallization process of the parent phase generates the defect structure.

The amorphization of rare earth permanent magnet alloy is achieved by a liquid quenching method which cools rapidly a molten metal of the rare earth permanent magnet alloy which consists of the elements. A ribbon which consists of an amorphous alloy is obtained by supplying the molten metal of the rare earth permanent magnet alloy which consists of the elements on a cooling wheel rotated under inert atmospheres, such as vacuum or gaseous argon. At this time, circumferential speed of the wheel is set within the range of 15 to 40 m/s, and the wheel used for cooling is selected from thermally conductive excellent copper, copper with which chromium is plated, or an alloy of copper and beryllium, etc. The thickness of the ribbon obtained by this quenching process is about 10 to 40 micrometers. The amorphous alloy can contain a part of crystallized phase, if required.

A mechanical alloying process which used a ball mill except the liquid quenching method which cools rapidly the molten metal of the rare earth permanent magnet alloy can also be used for the amorphization of rare earth permanent magnet alloy.

The crystallization is achieved by performing aging process of the alloy which is obtained from the process and which is made amorphous under inert atmospheres, such as vacuum or gaseous argon. The aging temperature is 550 to 950 °C, and the holding time is about 3 to 60 min.

When amorphization advanced too much, the characteristics variation of the magnet obtained may become large by the conditioning of future crystallization processes becomes difficult. A degree of amorphization may be adjusted in order to make easy to control crystal growth of the R₂Fe₁₄B type magnetic phase, and to leave a fine core for crystal growth. Accordingly, since crystal growth of the R₂Fe₁₄B type magnetic phase begins by the low temperature side a little, it becomes easy to control defect production which continues after that.

It is necessary to take that a deposition phenomenon happens quickly into consideration under a higher temperature, and to consider the balance of heat processing temperature and the holding time for crystallization. If there are an isothermal transformation miniature and a continuation cooling transformation diagram, a suitable value can be decided by referring to this. Also about formation of defect structure, it is the same as the above.

Both the crystal growth of the R₂Fe₁₄B type magnetic phase and the formation of defect structure are accelerated by heat processing. That is, although there are two objects, it may be hard to control both independently. Then, if needed, the heat processing for crystal growth and the heat processing for defect structure formation may be separated and controlled. In the case in which the aging deposit is performed at low temperature, it may be necessary to ensure the heat treating time for the aging deposit for long, referring to the characteristics of the magnet obtained.

Although an anisotropic process will be included in order to obtain an anisotropic magnet, the anisotropic process of R₂Fe₁₄B type magnetic phase can serve as the crystallization process of the R₂Fe₁₄B type magnetic phase. The anisotropic process of R₂Fe₁₄B type magnetic phase can serve as the aging precipitation process for defect structure formation. The anisotropic process of R₂Fe₁₄B type magnetic phase can serve as the crystallization process of the R₂Fe₁₄B type magnetic phase, and the aging precipitation process for defect structure formation. In using the anisotropic process under heating of hot plastic processing etc., process cost can be reduced by serving as the crystallization process of the R₂Fe₁₄B type magnetic phase, the aging precipitation process for defect structure formation, and the anisotropic process of the R₂Fe₁₄B type magnetic phase.

The anisotropic process of the R₂Fe₁₄B type magnetic phase can also be performed after the crystallization process of the R₂Fe₁₄B type magnetic phase. The aging temperature for forming defect structure is higher than hot plastic processing temperature, and may exceed the application limits temperature of the metallic mold used for hot plastic processing. In that case, the anisotropic of the R₂Fe₁₄B type magnetic phase can be performed by performing aging process previously and performing anisotropic orientation by hot plastic processing afterward.

In the above explanation, although explained as the rare earth permanent magnet alloy, it is not limited to this. The present invention may be composed as a material of a practical use permanent magnet. A rare earth permanent magnet material of the present invention comprises a rare earth-iron-boron type magnetic phase (R₂Fe₁₄B type magnetic phase) constituting a parent phase, a defect structure, and the parent phase grain boundary layer. The defect structure includes a part comprising the R₂Fe₁₄B type magnetic phase as a main component and that magnetic property is modulated from magnetic property of the parent phase. Magnetic hardening occurs by the interaction between the defect structure and a magnetic domain wall and the interaction between grain boundary phase and the magnetic domain wall.

In the permanent magnet material which has a crystal size from which the magnet main phase crystal grain which composes a magnet material can act as multi-magnetic domain particles, it is considered that magnetization reversal advances because magnetic domain wall displacement advances growth of an opposite magnetic domain on the basis of nucleation of a reversed magnetic domain near the grain boundary. In the magnet material using the R₂Fe₁₄B type magnetic phase, this magnetization reversal is prevented by arranging a rare earth rich phase to the grain boundary layer. The permanent magnet material using this rare earth permanent magnet alloy of the present invention obstructs magnetization reversal and constitutes a permanent magnet material which has high coercive force, exceeding the effect which stops magnetization reversal in the action of only the one side of a grain boundary or defect structure, by an interaction with the cooperative magnetic domain wall of a grain boundary and the defect structure near the grain boundary for the opposite magnetic domain nucleogenesis in early stages of magnetization reversal or the generated growth of an opposite magnetic domain core.

Next, the following experiment was conducted in order to examine the characteristics of the rare earth permanent magnet alloy according to the present invention.

The alloy ingot with composition of Pr_{13.8}Fe_{bal}Co_{8.3}Ti_{0.44}B_{12.7}Si_{0.65}Y_{0.64} was obtained by the method described in the following. Hereinafter, it will specifically explain.

First of all, weighing capacity of each material of Pr, Fe, Co, Ti, B, Y, and Si was performed, and the mother alloy ingot was obtained by vacuum suction method. Next, the melt-spun ribbon was obtained by using the single roller liquid rapid-quenching method in which a molten material was injected onto a roller surface. The wheel velocity was set to 20 m/ sec.

Then, annealing of "725 °C × 5min (Condition 1)", "750 °C × 5min (Condition 2)", and "850 °C × 5min (Condition 3)" was performed by setting the heat-raising time to 5min in gaseous argon atmosphere, for the samples of the melt-spun ribbon, respectively. At this point, the "heat-raising time to 5min" denotes that the time which the temperature raising to 725, 750, and 850 °C which is heat processing temperature required from room temperature was 5min. Furthermore, the notation "x 5min" denotes having set to 5min time which continued heating at 725, 750, and 850 °C, respectively, after the quenching ribbon was held at 725, 750, and 850 °C. The following notations are also the same. The magnetic properties of the annealed ribbons were measured by VSM (Vibrating Sample Magnetometer), after pulse magnetization.

The intrinsic coercive force (H_{CJ}) at about 20 °C of the magneto ribbon is shown in Table 1. On every condition 1, 2, and 3, it proved that they are the rare earth permanent magnet ribbons which have excellent H_{CJ}. If explaining specifically, the coercive force of the conventional rare earth permanent magnet alloy (Comparative Example 1 (Patent Document 1)) is about 568kA/m at the maximum, the coercive force of a rare earth permanent magnet alloy (Comparative Example 2) using the quenching ribbon put in practical use is 1094 kA/m, and the coercive force of a rare earth permanent magnet alloy (Comparative Example 3) which changed and produced quenching conditions (roll circumferential speed 10 m/s) and aging process temperature by the same composition is 1610 kA/m. In contrast, as a result of the measuring coercive force, the coercive force of the rare earth permanent magnet alloy according to example is 1841.0kA/m to 1967kA/m, and it turned out that coercive force is improving by leaps and bounds, as clearly from Table 1.

**Table 1**

| | Heat Processing Temperature T (°C) | H_{CJ} (kA/m) |
|---|---|---|
| Condition 1 | 725 | 1967.2 |
| Condition 2 | 750 | 1938.5 |
| Condition 3 | 850 | 1841.0 |

### [Citation Origin of the Comparative Examples]

Comparative Example 1: Patent Document 1 (Embodiment 3)
Comparative Example 2: The catalog value of commercial Nd-Fe-B permanent magnet alloy powder (MQP-C)
Comparative Example 3: Result with composition of Pr₁₃Fe_{bal}Co₈Ti_{1.5}B₁₄S_{0.5}Y_{0.7} of having overly annealed the melt-spun ribbon by 600 °C × 5min.

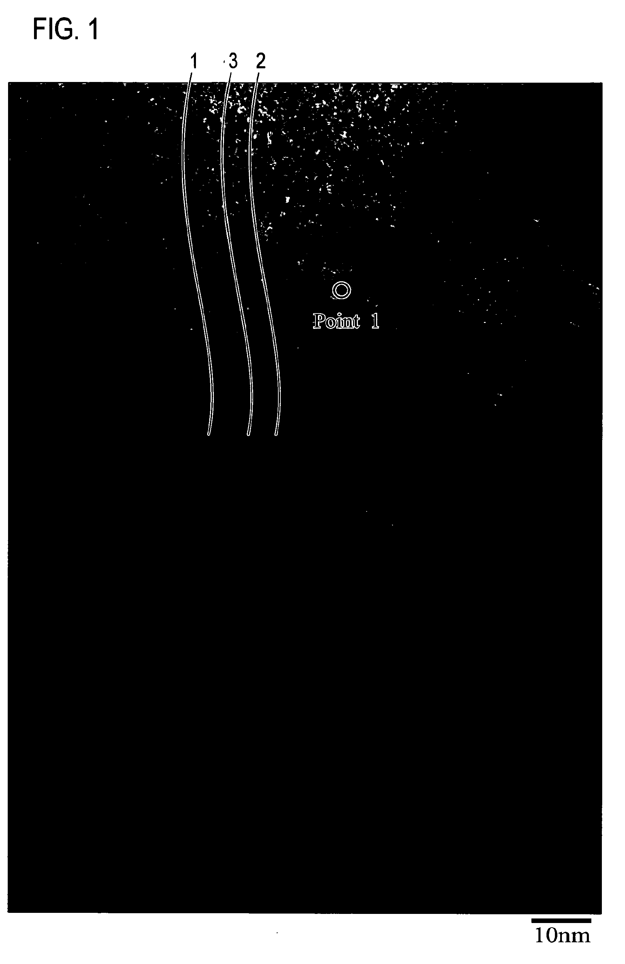

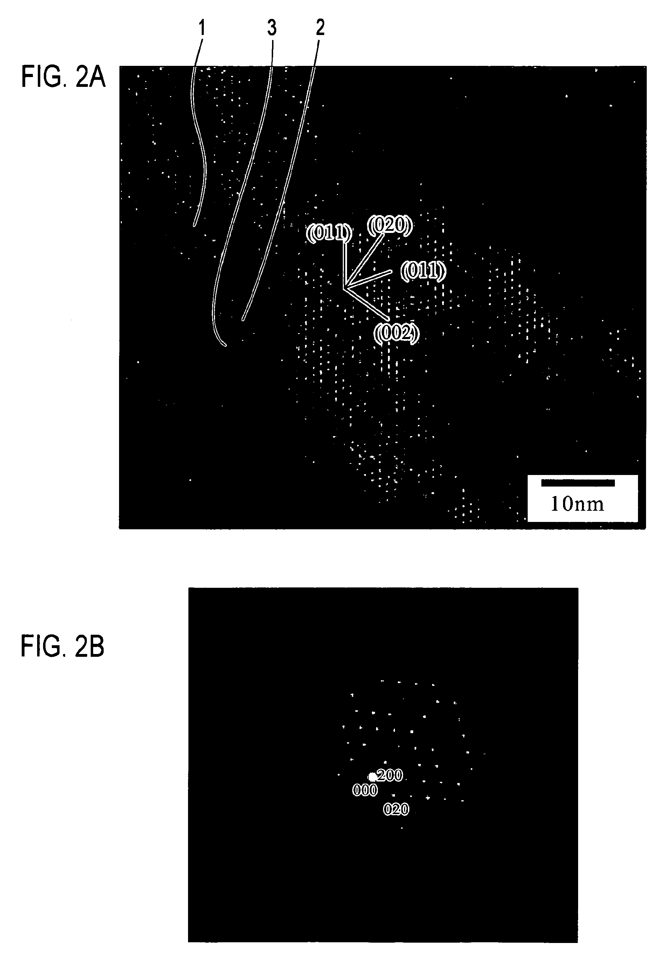

Fig. 1 shows a TEM bright field image observed by [001] zone axis incidence for the parent phase about the ribbon sample produced on the Condition 1. Fig. 2A shows a TEM bright field image obtained by enlarging a part of Fig. 1. Fig. 2B shows a nano beam diffracted image measured within the same visual field of Fig.2A.

In Fig. 1, two or more particles (defect structure 2) which are the size less than 10 nm can verify as contrast which the coherent strain field 3 forms to the inside whose lattice fringe of the Pr₂Fe₁₄B type magnetic phase 1 which is a parent phase can be seen. The line of downward-sloping located in the visual field lower left side is a grain boundary of the Pr₂Fe₁₄B type magnetic phase.

The round mark in Fig. 1 expresses the ultimate analysis position by EDS performed about the particles. The elemental ratio (Pr+Y)/(Fe+Co) in the analyzing position is 0.27 to 0.32 including an error and is a greater value than 1/7 which is the stoichiometry of the R₂Fe₁₄B type magnetic phase. The elemental ratio (Ti)/(Fe+Co) in the analyzing position is 0.07 to 0.09 including the error. The quantitative analysis of the light element in EDS analysis was difficult, and was not able to investigate the possession in portions state of B.

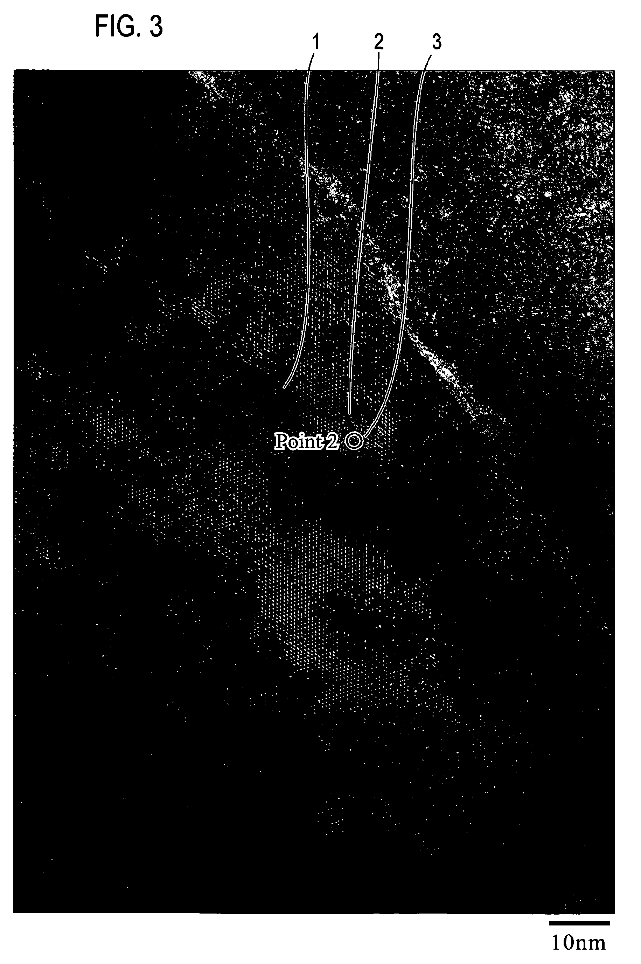

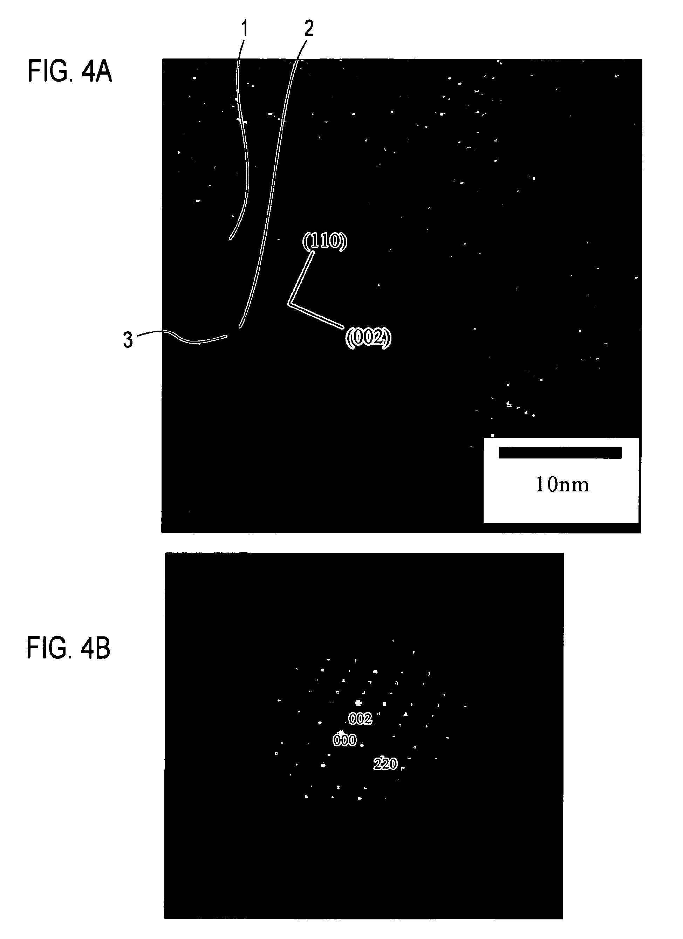

Fig. 3 shows a TEM bright field image observed by [110] zone axis incidence for the parent phase about the ribbon sample produced on the Condition 1. Fig. 4A shows a TEM bright field image obtained by enlarging a part of Fig. 3. Fig. 4B shows a nano beam diffraction pattern measured within the same visual field of Fig.4A.

In Fig. 3, two or more particles (defect structure 2) which are the size less than 10 nm can verify as contrast which the coherent strain field 3 forms to the inside whose plaid of the Pr₂Fe₁₄B type magnetic phase 1 which is a parent phase can be seen. The line of downward-sloping located in the visual field lower left side is a grain boundary of the Pr₂Fe₁₄B type magnetic phase.

The round mark in Fig. 3 expresses the ultimate analysis position by EDS performed about the particles. The elemental ratio (Pr+Y)/(Fe+Co) in the analyzing position is 0.26 to 0.34 including an error and is a greater value than 1/7 which is the stoichiometry of the R₂Fe₁₄B type magnetic phase. The elemental ratio (Ti)/(Fe+Co) in the analyzing position is less than 0.01 including the error.

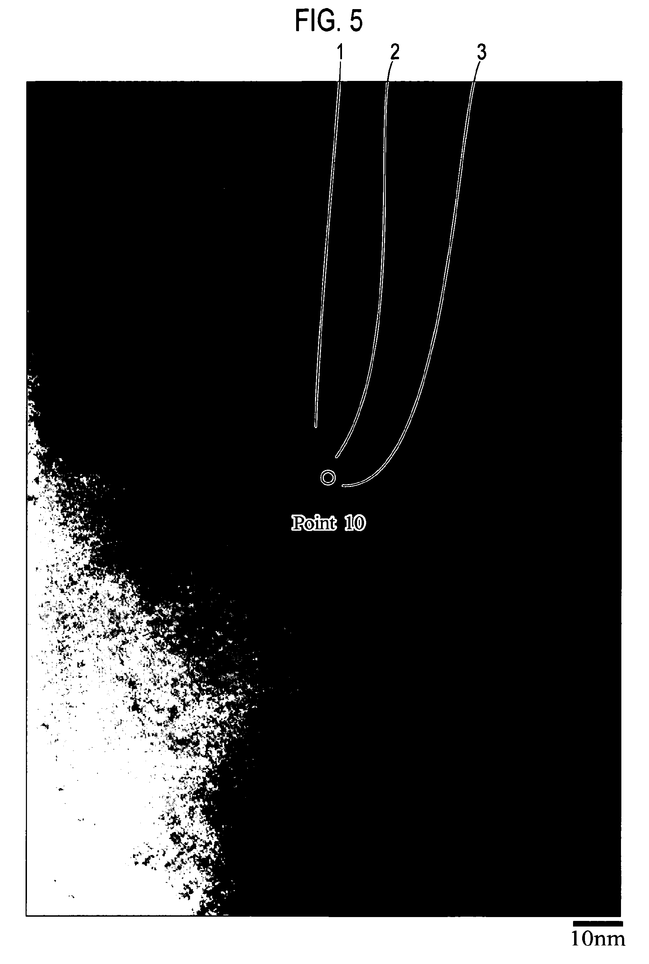

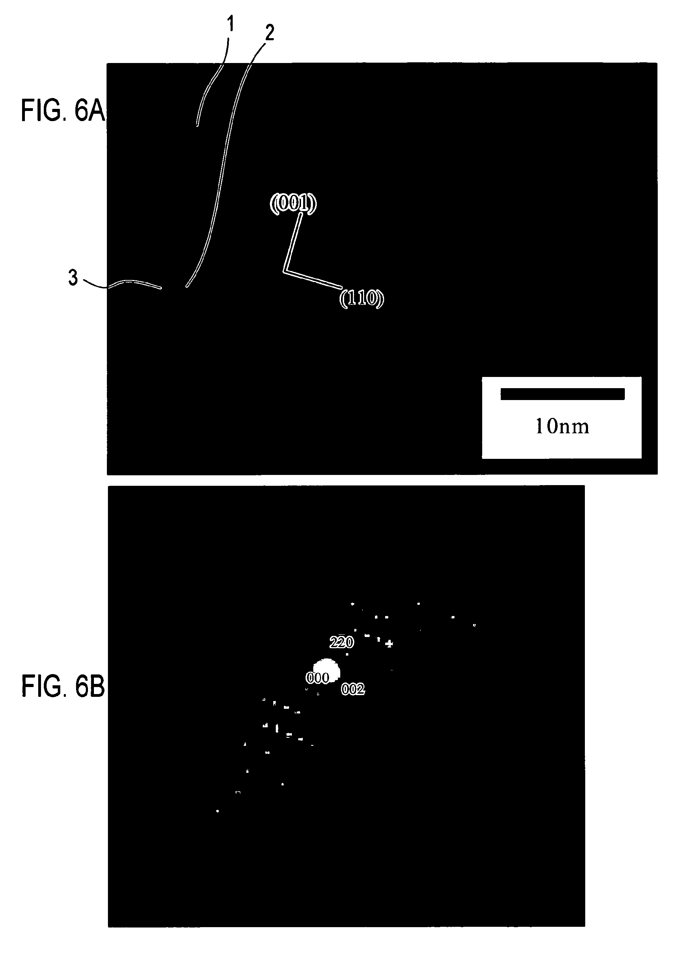

Fig. 5 shows a TEM bright field image observed by [110] zone axis incidence for the parent phase about the ribbon sample produced on the Condition 3. Fig. 6A shows a TEM bright field image obtained by enlarging a part of Fig. 5. Fig. 6B shows a nano beam diffraction pattern measured within the same visual field of Fig.6A.

In Fig. 5, two or more coffee beans-shaped particles (defect structure 2) with the size of about 10 nm can verify as contrast which a coherent strain field forms to the inside whose plaid of Pr₂Fe₁₄B type magnetic phase 1 which is a parent phase can be seen. In addition, the line of downward-sloping which connects the visual field right end lower berth to near the visual field left end middle is a grain boundary of the Pr₂Fe₁₄B type magnetic phase.

The round mark in Fig. 5 expresses the ultimate analysis position by EDS performed about the particles. The elemental ratio (Pr+Y)/(Fe+Co) in the analyzing position is 0.21 to 0.25 including an error and is a greater value than 1/7 which is the stoichiometry of the R₂Fe₁₄B type magnetic phase. The elemental ratio (Ti)/(Fe+Co) in the analyzing position is 0.04 to 0.05 including the error.

Fig. 7 is an enlarged drawing of the particles located near the central part of Fig. 5. As clearly from Fig. 7, two or more coffee beans-shaped particles (defect structure 2) with a size of about 10 nm can verify as contrast which the coherent strain field 3 forms. In the case of Fig. 7, the precipitation phase 4 can be seen clearly.

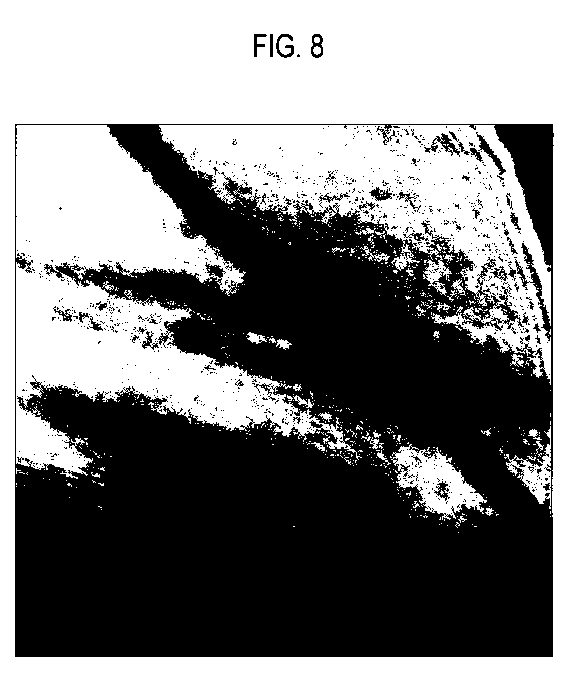

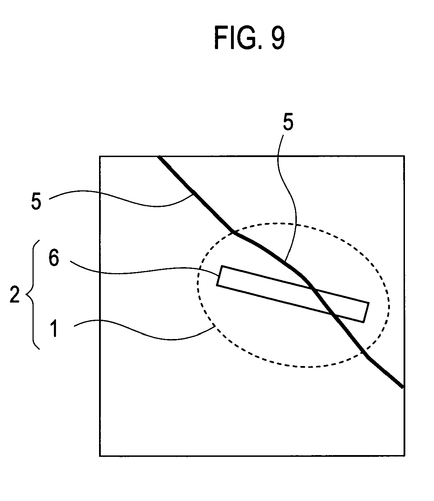

In order to investigate about the configuration of the defect structure (coffee beans-shaped image of Fig. 5) seen in the TEM bright field image, about the magnet alloy produced on the Condition 3, the LACBED (Large Angle Convergence Electron Beam Diffraction) pattern was investigated. The observed transmitted disk and the HOLZ (high order Laue zone) pattern which overlaps there with is shown in Fig. 8, and the explanation about the pattern is shown in Fig. 9.

As shown in Fig. 8 and Fig. 9, an impurity considered to be a deposit by central placing to the right of a visual field at a line exists, and a black line 5 which crosses this impurity from the screen upper left to the lower right is a dark line (HOLZ line) which HOLZ reflection of the Pr₂Fe₁₄B type magnetic phase which is a parent phase causes. If Fig. 8 is made into a scheme, it will become as shown in Fig. 9. As clearly from Fig. 8 and Fig. 9, the defect structure 2 is formed with the impurity 6 and the R₂Fe₁₄B magnetic phase 1 accompanied by the circumference strain of the deposit. As clear from Fig. 8 and Fig. 9, the HOLZ line of the R₂Fe₁₄B magnetic phase 1, i.e., the dark line 5, is curving around the impurity 6. Since it overlaps with the impurity and the HOLZ dark line 5 of the parent phase continues, it is known that the neighborhood of the impurity as well as the parent phase consists of the Pr₂Fe₁₄B type magnetic phase. Moreover, since the HOLZ line 5 of the parent phase is curving near the impurity, it proves that the Pr₂Fe₁₄B type magnetic phase around the impurity is accompanied by the strain.

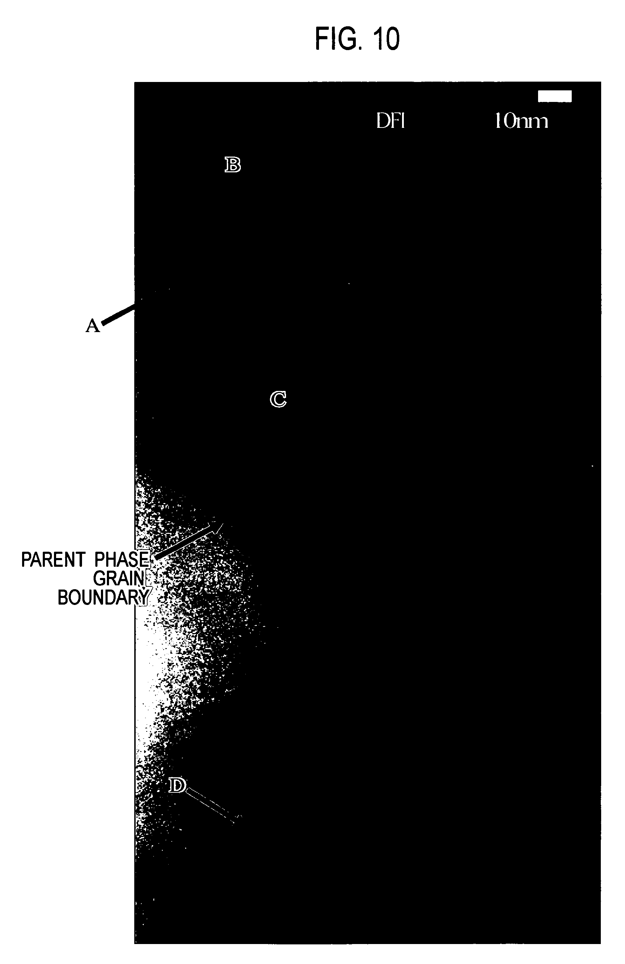

About the magnet alloy produced on the conditions 3, in order to investigate about the configuration (in particular element distribution information) of the defect structure 2 of Fig. 5 seen in the TEM bright field image, observation by an HAADF-STEM (High-Angle Annular Dark-Field Scanning Transmission Electron Microscopy) was performed. The result is shown in Fig. 10, Figs. 11A, 11B, Figs. 12A,12B, Figs. 13A,13B, and Figs. 14A, 14B.

The composition image by Z contrast is seen in the HAADF-STEM image. A rough and large crystal grain in which Pr₂Fe₁₄B type magnetic phases differ, respectively exists in the upper half and lower half in the visual field, and a grain boundary is existed in downward-sloping from the left-hand side middle. In the drawings, a right end dark region is a vacuum region without a sample.

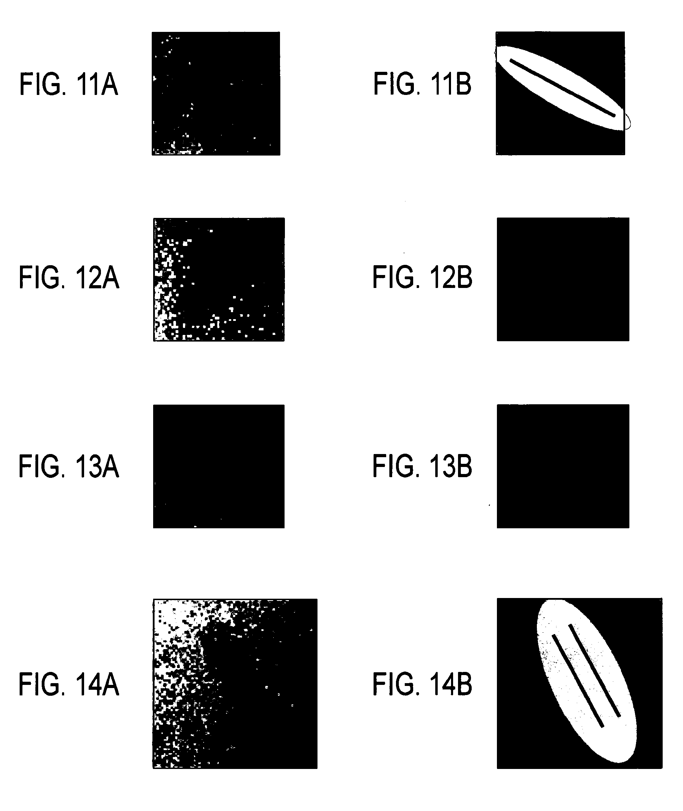

As shown in Figs. 11A, 11B, Figs. 12A,12B, Figs. 13A,13B, and Figs. 14A,14B, two or more defect structures which are in sight in Fig. 10 are extracted, the reference numeral (the encircled region A to the encircled region D) is attached, and enlarged image and the explanation (conceptual diagram) about the enlarged image is attached for each region. In the encircled region A, a sharp dark line is seen and the region brighter than a parent phase encloses to the circumference. The light element condenses into this dark line portion, and the heavy element further condenses in that circumference. It is expected that B and Ti correspond as a light element and Pr and Y correspond as a heavy element. When the comparison of the TEM bright field image and the HAADF-STEM image about identical test items was performed, this dark line portion obtained the result which is in agreement with the center portion of the coffee beans-shaped particles of Fig. 7. Although the encircled region B is also observed as dark part, not a sharp line but a style like an ellipse is presented. Although the encircled region C is also observed as a dark part, it seems that not a sharp line but two styles like an ellipse are overlapped. In the encircled region D, a sharp dark line acts as two pairs and exists, and between the pair and a pair of circumference are satisfied by the bright portion.

The above-mentioned conditions 1 to 3 performed the alloy production by the vacuum suction method. The magnet ribbon was produced as well as the conditions 1 to 3 except changing the alloy manufacturing method into book mold casting, and changing the composition of the alloy ingot was Pr_{13.8}Fe_{bal}Co₈Ti_{1.5}B₁₄Si_{0.5}Y_{0.67}. The heat processing temperature performed two kinds, 700 °C (Condition 4) and 750 °C (Condition 5). The intrinsic coercive force H_{CJ} was a magnet which is excellent in intrinsic coercive force with 1668.7kA/m and 1642.8kA/m, respectively. Texture observation was performed about the magnet alloy produced by the Condition 5.

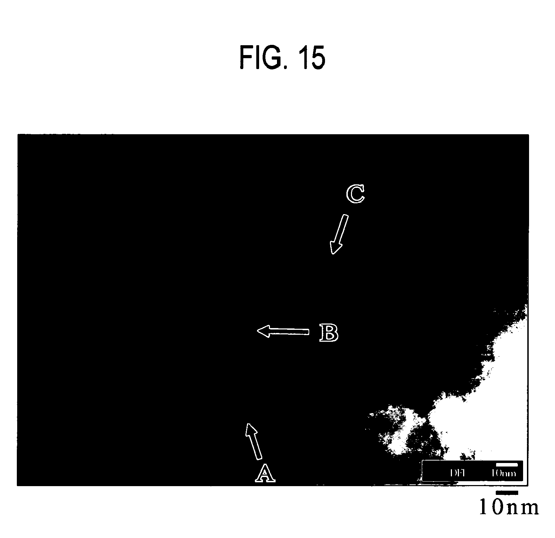

Fig. 15 shows an HAADF-STEM image observed about the ribbon sample produced by the Condition 5. In the rough and large Pr₂Fe₁₄B type magnetic phase crystal grain, the complicated pattern of the light and darkness which defect structure forms from the size of about 10 nm can be realized. These consist of a dark line, the dark line and the bright portion which encloses the surroundings of it, etc.

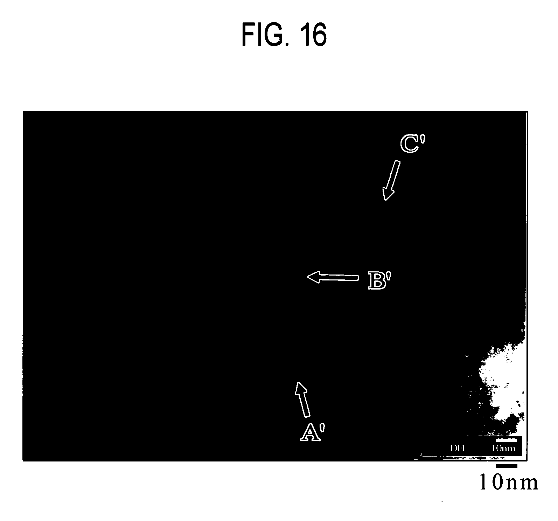

Fig. 16 shows an HAADF-STEM image at the time of making about 10 degrees of samples incline to an apparatus about the same visual field as Fig. 15. The axis of rotation of the sample was made into the axis of a horizontal direction within page space.

In order to consider the configuration of the defect structure of the plenty of seen by Fig. 15 and Fig. 16, the configuration in the inside of Fig. 15 was compared with the configuration in the inside of Fig. 16 about specific defect structure.

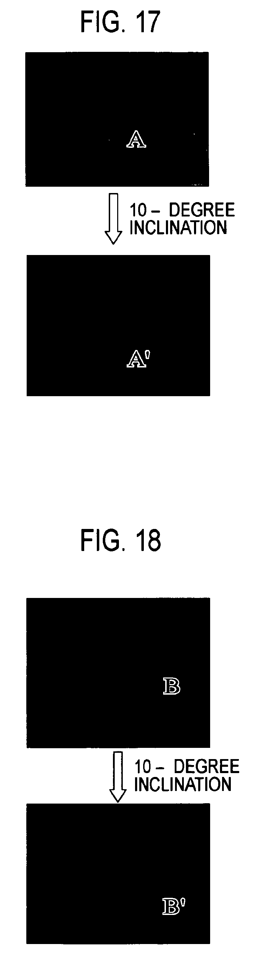

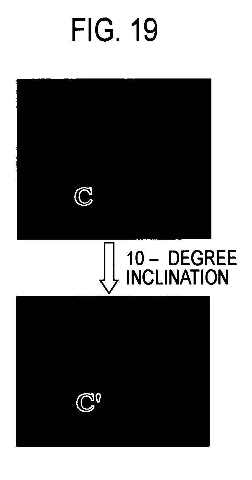

The configuration in the inside of Fig. 15 and the configuration in the inside of Fig. 16 are extracted and shown in Figs. 17-19 about specific defect structure.

The defect structure A in Fig. 15 is equivalent to A' in Fig. 16. The defect structure A, which is in sight as a sharp dark line in Fig. 15 (tilt angle of 0 degree), is in sight as dark line A' blurred a little widely in Fig. 16 (tilt angle of 10 degrees).

The defect structure B in Fig. 15 is equivalent to B' in Fig. 16. The defect structure B, which is in sight as a sharp dark line pair in Fig. 15 (tilt angle of 0 degree), is in sight as blurred dark part B' in Fig. 16 (tilt angle of 10 degrees), and is not able to be recognized as two objects any longer.

The defect structure C in Fig. 15 is equivalent to C' in Fig. 16 followed by the right and left thick long dark line. The defect structure C seen as a square dark part between the dark lines in right and left in Fig. 15 (tilt angle of 0 degree) is in sight as two sharp dark line pairs in Fig. 16 (tilt angle of 10 degrees).

As for these results, the dark line and the dark line pair show a possibility of being a contrast image which the light element which condensed platy builds.

Since the dark line which is visible by HAADF-STEM fades if it makes a sample incline, it is shown that the possibility of the platy deposit instead of a needlelike deposit is high. In the HAADF-STEM image, it is shown that the bright section spreads around a dark line (the light element condenses to the line and the heavy element surrounds the surroundings of it). In the STEM-EDS line analysis, the dark line portion shows Ti concentration and both the side shows Pr concentration.

A magnet ribbon was produced as well as the magnet alloy produced on the Condition 5 except changing the wheel velocity into 25 m/s, and changing the heat processing temperature into 850 °C (Condition 6). Since the intrinsic coercive force H_{CJ} is 1751.5 A/m, the magnet is excellent in intrinsic coercive force.

After producing the alloy mass which consists of Pr, Y, Fe, Co, Ti, B, and Si by the arc melting method and making this into a melt-spun ribbon in roll circumferential speed 18 m/s by the liquid quenching method, the heat processing was performed and then the magnet ribbon was obtained. The used alloy composition was Pr_{13.6}Y_{0.6}Fe_{63.9}Co_{8.4}Ti_{0.6}B_{11.3}Si_{0.6} by ICP atomic emission spectroscopy. When the heat processing temperature was 900 °C, the holding time was set to 60min (Condition 7), and the heat processing temperature was 950 °C and the holding time was set to 10min (Condition 8), the intrinsic coercive force became 1826.6kA/m and 1857.3kA/m, respectively, and any magnetwas excellent in intrinsic coercive force.

The magnet ribbon was produced as well as the Condition 7 except producing the alloy mass which consists of Pr, Fe, Co, Ti, B, and Si, setting the alloy composition to Pr_{13.9}Fe_{66.1}Co_{8.7}Ti_{1.6}B₉Si_{0.7} and setting the holding time of heat processing to 10min (Condition 9). The intrinsic coercive force H_{CJ} became 1905.0kA/m, and this magnet was excellent in intrinsic coercive force.

After producing the alloy ingot which consists of Pr, Y, Fe, Co, B and Si by the arc melting method and making this into a melt-spun ribbon in wheel velocity was set to 18 m/s by the liquid rapid-quenching method, the annealing was performed and the magnet ribbon was obtained. The used alloy composition was Pr_{13.3}Y_{0.6}Fe_{63.5}Co_{8.1} B_{14.1} Si_{0.6} by ICP atomic emission spectroscopy. When the annealing temperature was 600 °C, the holding time was set to 10 min (Condition 10), the annealing temperature was 900 °C, the holding time was set to 10 min (Condition 11), and the annealing temperature was 950 °C, the holding time was set to 10 min (Condition 12), the intrinsic coercive force became 1880.6, 1678.4, and 1627.5 kA/m respectively, and any magnet was excellent intrinsic coercive force.

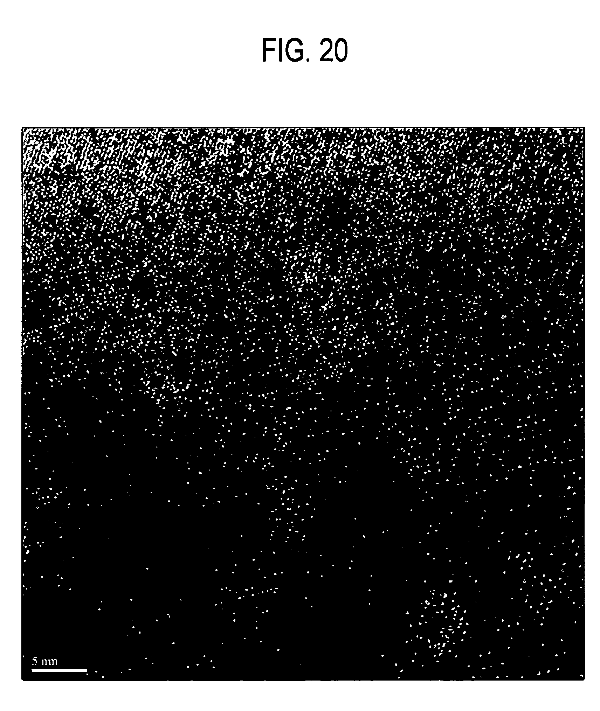

Fig. 20 shows a TEM bright field image observed [100] zone axis incidence for the parent phase about the magnet ribbon sample produced on the Condition 10. In Fig.20, two or more particles (defect structure 2) which are the size less than 10 nm can verify as contrast which the coherent strain field 3 forms to the inside whose lattice fringe of the Pr₂Fe₁₄B type magnetic phase 1 which is a parent phase can be seen. The EDS analysis was performed about the particles, and the element ration (Pr + Y)/(Fe + Co) in the analysis position about the particles is about 0.17 and is a greater value 1/7 which is the stoichiometry of the R₂Fe₁₄B type magnetic phase. The quantitative analysis of the light element in EDS analysis was difficult, and was not able to investigate the distribution of B.

The magnet ribbon was produced as well as the magnet alloy produced on the Condition 5 except the raw material alloy composition was set to the Pr₁₂Y₁Fe_{66.5}Co₈Ti_{1.5}B_{10.5}Si_{0.5} and the heat processing temperature having been 800 °C (Condition 13). The intrinsic coercive force H_{CJ} became 1628.2kA/m, and this magnet was excellent in intrinsic coercive force.

After obtaining the alloy mass of composition Pr₁₃Y_{0.7}Fe_{bal}Co₈Ti_{1.5}B₁₄Si_{0.5} by book-mold casting method, the alloy ribbon was obtained with the liquid quenching method that the roll circumferential speed was set to 25 m/s. After having performed vacuum enclosure of this powder at the container made by soft iron, heating at 850 °C and holding for 3 minutes, it compressed by the crank press and was applied as the hot plastic processing magnet. Magnetic characteristics were measured about the compact which performed resin fixation of the obtained magneto flakes. Although it had become the magnet which performed the anisotropic magnetically weakly by hot plastic processing, it stayed in the low value which is 1089.2kA/m about intrinsic coercive force. The Pr₂Fe₁₄B type crystal grain is composed from short particles by C axial direction mainly by a little less than two aspect ratio. It resulted in it being inferior in intrinsic coercive force compared with the isotropic magnet ribbon of similar aging conditions because particles became flat. That is, since the grain boundary size per unit volume increased, it is the result of a difference occurring in the cooperative interaction of the grain boundary and the defect structure to the magnetic domain wall near the grain boundary in the early stages of magnetic reversal.

The entire content of Japanese Patent Application No. TOKUGAN 2007-234793 with a filing date of September 10, 2007, and Japanese Patent Application No. TOKUGAN 2008-066884 with a filing date of March 14, 2008 is hereby incorporated by reference.

## Claims

1. A rare earth permanent magnet alloy comprising:
a rare earth-iron-boron type magnetic phase (R₂Fe₁₄B type magnetic phase) constituting a parent phase; and
a defect structure,
wherein the parent phase contains the defect structure, and the defect structure includes a part comprising the R₂Fe₁₄B type magnetic phase as a main component and that magnetic property is modulated from magnetic property of the parent phase.

2. A rare earth permanent magnet alloy according to claim 1, wherein the part is formed by element concentration.

3. A rare earth permanent magnet alloy according to claim 1, wherein the part is formed by lattice strain resulting from element concentration.

4. A rare earth permanent magnet according to claim 1, wherein the defect structure includes impurity.

5. A rare earth permanent magnet alloy according to claim 4, wherein the impurity induces lattice strain of the R₂Fe₁₄B phase comprising the defect structure.

6. A rare earth permanent magnet alloy according to claim 1, wherein the defect structure includes precipitated phase originated from supersaturated solid solution.

7. A rare earth permanent magnet alloy according to claim 1, wherein the R is a rare earth element including Yttrium (Y).

8. A rare earth permanent magnet alloy according to claim 1, wherein the magnetic phase includes at least one or more kind of additive element in addition to R, Fe, and B.

9. A producing method of a rare earth permanent magnet alloy comprising the steps of:
generating a defect structure included in a rare earth-iron-boron type magnetic phase (R₂Fe₁₄B type magnetic phase) constituting a parent phase and comprising the R₂Fe₁₄B type magnetic phase as a main component,
wherein the defect structure is generated to include a part that magnetic property is modulated from magnetic property of the parent phase by performing one or more aging process.

10. A producing method of a rare earth permanent magnet alloy according to claim 9, wherein at least one amorphization process and a crystallization process of the parent phase after the amorphization process are performed as the aging process.

11. A producing method of a rare earth permanent magnet alloy according to claim 9, wherein the defect structure is generated by the crystallization process.
